# EUROPEAN PATENT SPECIFICATION

(11) **EP 2 216 939 B1**
(45) Date of publication and mention of the grant of the patent: **01.05.2019**
(21) Application number: 08700690.4
(22) Date of filing: 18.01.2008
(51) Int. Cl.: H04L 12/24, H04Q 11/00, H04Q 3/00, H04L 12/707, H04L 12/703

(54) **MAINTAINING METHOD FOR AUTOMATIC SWITCHED OPTICAL NETWORK SYSTEM WHEN OPERATION ENGENDERS ALARM**
WARTUNGSVERFAHREN FÜR EIN AUTOMATISCHES VERMITTELTES OPTISCHES NETZWERKSYSTEM, WENN DER BETRIEB ALARM ERZEUGT
PROCÉDÉ DE MAINTIEN POUR SYSTÈME DE RÉSEAU OPTIQUE À COMMUTATION AUTOMATIQUE LORSQU'UN FONCTIONNEMENT ENGENDRE UNE ALARME

(30) Priority: 30.10.2007 CN 200710165205
(43) Date of publication of application: 11.08.2010
(73) Proprietor: ZTE Corporation, Shenzhen, Guangdong 518057 (CN)
(72) Inventor: LI, Na, Guangdong 518057 (CN); TAO, Muliu, Guangdong 518057 (CN)
(74) Representative: Dr. Weitzel & Partner
(86) International application number: PCT/CN2008/000141
(87) International publication number: WO 2009/055995

(56) References cited:
- EP-A1- 1 489 784
- EP-A1- 1 727 316
- EP-A1- 1 845 640
- WO-A1-2006/116896
- CN-A- 1 859 156
- CN-A- 1 885 789
- CN-A- 1 885 789
- CCAMP GMPLS P&R DESIGN TEAM J P LANG (EDITOR) Y REKHTER (EDITOR) D PAPADIMITRIOU (EDITOR): "RSVP-TE Extensions in support of End-to-End Generalized Multi-Protocol Label Switching (GMPLS)-based Recovery; draft-ietf-ccamp-gmpls-recovery-e2e-signal ing-03.txt", 20050401, vol. ccamp, no. 3, 1 April 2005 (2005-04-01), XP015038129, ISSN: 0000-0004

## Description

### Filed of the Invention

The present invention relates to optical communication field, in particular to a maintenance method for the ASON (Automatic Switched Optical Network) system when service generates an alarm.

### Background of the Invention

The ASON network has a basic characteristic that a control plane takes full responsibility for handling service maintenance (including the establishment, deletion, protection and restoration of the service), i.e., the establishment of a signaling channel, the application for resources, the allocation of cross connection and so on are all managed by the control plane. In practical application, the control plane and the transmission plane are usually separated, thus when the service of the transmission plane goes wrong and generates an alarm, it is necessary for the control plane to timely and correctly obtain the alarm information, and properly carry out service maintenance, so as to reduce discontinuity or instantaneous interruption of the service, and eliminate the residual resources in the transmitting plane.

Due to the malfunction of the service, corresponding protection switching actions need to be carried out simultaneously at the head node and the tail node, while the present alarm information needs to be transmitted to the head node via a plurality of service nodes node by node during transmission. When the head node sends a service maintenance request to the tail node, it has also to pass through a plurality of service nodes node by node. Such a node-by-node transmitting method takes a long time, which usually causes the discontinuity or instantaneous interruption of the service. Further, when a certain node goes wrong on the service path, it is possible that some nodes on the service path can not receive the service maintenance request sent by the head node, and thus the transmission resources between the intermediate node and the tail node can not be effectively released, thereby causing the formation of residual connection. CN 1885789 provides a technical solution; however, the above mentioned problem still remains unsolved.

### Summery of the Invention

The present invention provides a maintenance method for automatic switched optical network system when service generates an alarm to solve the problems of slow transmission of alarm information, discontinuity or instantaneous interruption of the service, formation of residual connection in the prior art.

A maintenance method for automatic switched optical network system when service generates an alarm, which comprises:
Step A: after a service is successfully established, a head node setting a local alarm monitoring and respectively requesting an intermediate node and a tail node to set an alarm monitoring; and the intermediate node and the tail node setting their own local alarm monitoring according to the requests of the head node;
Step B: when the intermediate node and/or the tail node generates an alarm, notifying the head node of the alarm information which affects the service;
Step C: according to the received alarm information, the local alarm information of the head node and a protection and restoration strategy pre-configured by the head node, the head node setting a service maintenance strategy and a service maintenance operation, and notifying the service maintenance strategy to the tail node;
Step D: t the head node and the tail node carrying out corresponding maintenance operation according to the service maintenance strategy.

Further, step A specifically comprises:
Step A1: the control plane of the head node storing the route information of the whole service path during the service establishing process; and the intermediate node and the tail node storing their local inputting port identifier, local outputting port identifier and local time slot information of the service passing through the intermediate node and the tail node;
Step A2: after establishing the service successfully, the head node sending an alarm monitoring to a corresponding time slot of a transmission plane of the head node according to the inputting port identifier, the outputting port identifier and the time slot information of the head node through which the service passes; and at the same time, the head node requesting the intermediate node and the tail node to set an alarm monitoring using a notify message with an alarm monitoring setting request;
Step A3: the intermediate node and the tail node sending an alarm monitoring to corresponding time slots of their transmission planes according to the inputting port identifier, the outputting port identifier and the time slot information of the service passing through the intermediate node and the tail nod.

Further, step B specifically comprises:
When the intermediate node or the tail node generates an alarm, their control planes sending the alarm information which affects the service to the head node using the notify message with a transmission plane alarm report according to the matching of the alarm monitoring nodes.

Further, step C specifically comprises:
Step C1: the head node judging whether the service has a malfunction according to the received alarm information of the matching monitoring nodes and the local alarm information of the head node;
Step C2: when it is judged that the service has a malfunction, the head node setting the service maintenance strategy for the head node and the tail node according to the protection and restoration strategy pre-configured by the head node;
Step C3: the head node sending the service maintenance strategy to the transmission plane of the head node, and transmitting the notify message with the service maintenance strategy to the tail node.

The service maintenance strategy set by the head node at least comprises one of the following strategies: service prohibition, service permission, service deletion, service bridging, service switching, service bridging cancellation, and service switching cancellation.

Further, when the service maintenance strategy is the service deletion, step D comprises:
Step D1: when a management plane sends a service deletion request, the head node finding that the service still has an alarm according to the stored alarm information, initiating the deletion to the downstream, and at the same time, requesting the tail node, using the notify message with an service deletion request, to initiate the service deletion together with the head node;
Step D2: the tail node initiating the service deletion to the upstream after receiving the deletion request from the head node.

Further, the method also comprises:
Step E: after a reboot of the head node, the head node actively inquiring the alarm information of the intermediate node and/or the tail node; the intermediate node and/or the tail node sending their current alarm information to the head node according to the alarm inquiring request of the head node.

Further, step E specifically comprises:
Step E1: when the head node reboots itself, the head node inquiring the reported alarm information of the intermediate node and/or the tail node lost during reboot process using the notify message with an alarm inquiry;
Step E2: when receiving the alarm inquiry request from the head node, the intermediate node and/or the tail node of the service refreshing the current alarm information with their transmission planes, and sending the newest alarm information to the head node using the notify message with an alarm inquiry response.

To sum up, the maintenance method for automatic switched optical network system when service generates an alarm carries out node-to-node communication between any nodes of the service using notify message, and different nodes carry out corresponding service maintenance operations according to the different information carried by the received notify message, thereby achieving the purposes of rapid transmission of the alarm information, reduction of the discontinuity or instantaneous interruption of the service, and alleviation of the formation of residual connection of the transmission resources.

### Brief Description of the Drawings

- Fig.1: is a flowchart of the method of the present invention;
- Fig.2: is a structure view of the ASON network of the first to the fourth embodiments of the method of the present invention;
- Fig.3: is a flowchart of the first embodiment of the method of the present invention;
- Fig.4: is a flowchart of the second embodiment of the method of the present invention;
- Fig.5: is a flowchart of the third embodiment of the method of the present invention;
- Fig.6: is a flowchart of the fourth embodiment of the method of the present invention.

### Detailed Description of the Embodiments

The method of the present invention will be described in detail with reference to the drawings.

The core of the method of the present invention is to carry out node-to-node communication between any nodes of the service using the notify message of the RSVP (Resource Reservation Protocol), and different nodes carry out corresponding service maintenance operations according to different information carried in the received notify message.

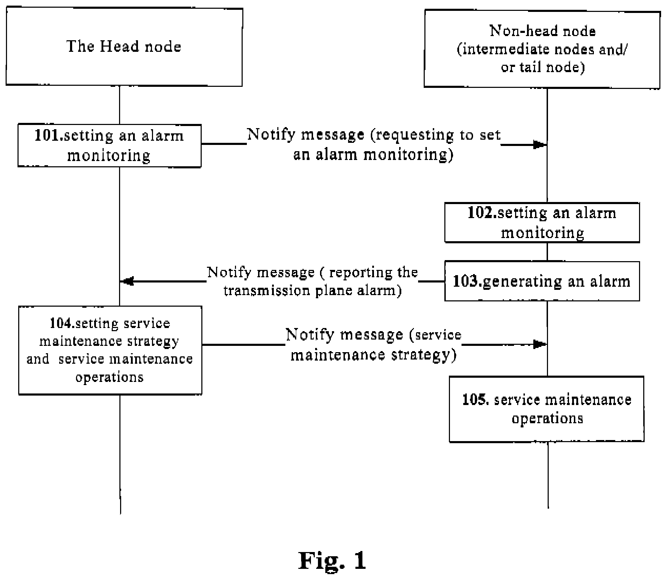

As shown in Fig.1, Fig.1 is a flowchart of the method of the present invention, specifically comprising the following steps:
Step 101: after a service is successfully established, a head node sets a local alarm monitoring and respectively requests an intermediate node and a tail node to set an alarm monitoring;
   In particular, the control plane of the head node stores the route information of the whole service path during the service establishing process, and other nodes store their local inputting port identifier and local outputting port identifier and local time slot information of the service passing through the nodes; after a service is successfully established, the head node sends an alarm monitoring to a corresponding time slot of a transmission plane of the head node according to the inputting port identifier and the outputting port identifier and the time slot information of the head node through which the service passes; at the same time, the head node sends notify message to other nodes which the service passed through according to the actual demand, and the information carried by the notify message is a "request setting alarm monitoring".
Step 102: the intermediate node and the tail node set their own local alarm monitoring according to the requests of the head node;
   In particular, the intermediate node and the tail node of the service sends an alarm monitoring of the relevant position to the transmission plane according to the local inputting port and the local outputting port and the local time slot information stored in the node after receiving the notify message with an alarm monitoring setting request sent by the head node.
Step 103: when the intermediate node and/or the tail node generates an alarm, notifying the head node of the alarm message which affects the service;
   In particular, when the intermediate node or the tail node generates an alarm, the control plane of the local node sends the accordant alarm information to the head node through the notify message according to the matching of the alarm monitoring nodes (a plurality of time slots may generate a plurality alarms, but only the alarm generated by the time slot which bears service can effect the service, therefore, the alarm generated by the time slot which bears service needs to be reported), and then the information carried by the notify message is a "transmitting plane alarm reporting". The matching process of the alarm monitoring nodes has been included in the detailed solution scheme of the prior art, and unnecessary details will not given.
Step 104: according to the received alarm information, the local alarm information of the head node and a protection and restoration strategy pre-configured by the head node, the head node sets a service maintenance strategy and a service maintenance operations, and notifies the service maintenance strategy to the tail node;
   In particular, the head node judges the alarm information received by the head node and the local alarm information of the head node comprehensively to determine whether there is a malfunction of the service;
   104-1: in case that the malfunction of the service is determined by analyzing the alarm information comprehensively, and then the head node needs to set the service maintenance strategies of the head node and the tail node according to the service protection and restoration strategy pre-configured by the head node, including service prohibition, service permission, service deletion, service bridging, service switching, service bridging cancellation, service switching cancellation and etc; when one of the service maintenance strategy is determined to use, the head node shall immediately sends the maintenance operation strategy to the transmission plane of the head node, and at the same time, sends the relevant maintenance operation strategy to the tail node through the notify message, then the head node and the tail node together accomplish the maintenance of the service.
   104-2: in case that the malfunction of the service is not determined by analyzing the alarm information comprehensively (alarming has transmission property, the outside alarm of the service may be transmitted to the inside of the service, and actually has no effect to the service, and then the service has no malfunction), and then the head node shall abandon the alarm information and stop further action.
Step 105: the relevant maintenance operation shall be carried out according to the service maintenance strategy in the notify message after the tail node receives the notify message.

Wherein, the head node of the service needs to notify the tail node to carry out the service deletion together (by using compulsive deletion method) when the service maintenance strategy is the service deletion, and the procedure specifically comprises the following:
When a management plane sends a service deletion request, the head node finds that the service still has an alarm according to the stored alarm information, initiates the deletion to the downstream, and at the same time, requests the tail node, using the notify message with an service deletion request, to initiate the service deletion together with the head node.

The tail node initiates the service deletion to the upstream after receiving the deletion request from the head node.

The method of the present invention also comprises: after a reboot of the head node, the head node actively inquires the alarm information of the intermediate node and/or the tail node; the intermediate node and/or the tail node send their current alarm information to the head node according to the alarm inquiring request of the head node.

In particular, when the head node reboots itself, the head node inquires the reported alarm information of the intermediate node and/or the tail node lost during reboot process using the notify message with an alarm inquiry; when receiving the alarm inquiry request from the head node, the intermediate node and/or the tail node of the service refresh the current alarm information with their transmission planes, and send the newest alarm information to the head node using the notify message with an alarm inquiry response.

The present invention will be described in detail hereinafter by instances in order to make the purposes, technical scheme and advantages of the present invention clear, but will not be taken as the limitation of the present invention.

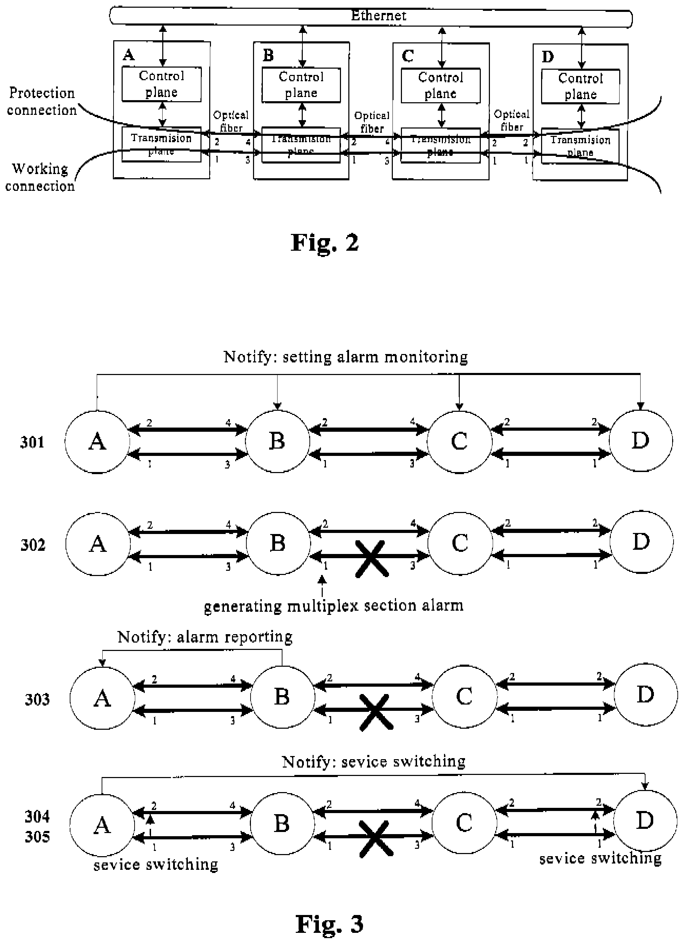

Constructing an ASON network shown in the Fig.2, the ASON comprises four network elements A, B, C and D, and each network element comprises a control plane and a transmitting plane. The service channels among the network elements are connected through an optical fiber, and the control channels among the network elements are connected through Ethernet. Wherein, network element A is the head node of the service; B and C are the intermediate nodes; and D is the tail node of the service. There are two connections among the four nodes, one is a working connection of the service, and the other one is a protection connection. Normally, the service bears on the working connection.

As shown in Fig.3 which is a flowchart of the first embodiment of the method of the present invention, and the procedure specifically comprises the following steps:
Step 301: after a service is successfully established, node A sets a local alarm monitoring and respectively informs nodes B, C and D to set their own local alarm monitoring; nodes B, C and D respectively set their own local alarm monitoring according to the request of node A;
Step 302: No.1 optical port of node B detects multiplex section alarm information on the receiving direction when the fiber of the working connection passed by node B disconnects on the receiving direction;
Step 303: the transmission plane of node B reports the alarm to the local control plane; the local control plane of the node B sends the multiplex alarm information to node A through notify message after the multiplex alarm is determined as the alarm which affects the service by matching;
Step 304: node A determines the malfunction of the working connection after receiving the multiplex alarm information of node B; due to the protection connection of the service, node A initiates the switching action of the service, and at the same time, sends the notify message to node D to inform node D to carry out switching action;
Step 305: node D sends service switching order to the local transmission plane after node D received the switching notify message sent by node A to carry out the service switching;
   Now, the service protection is successfully restored.

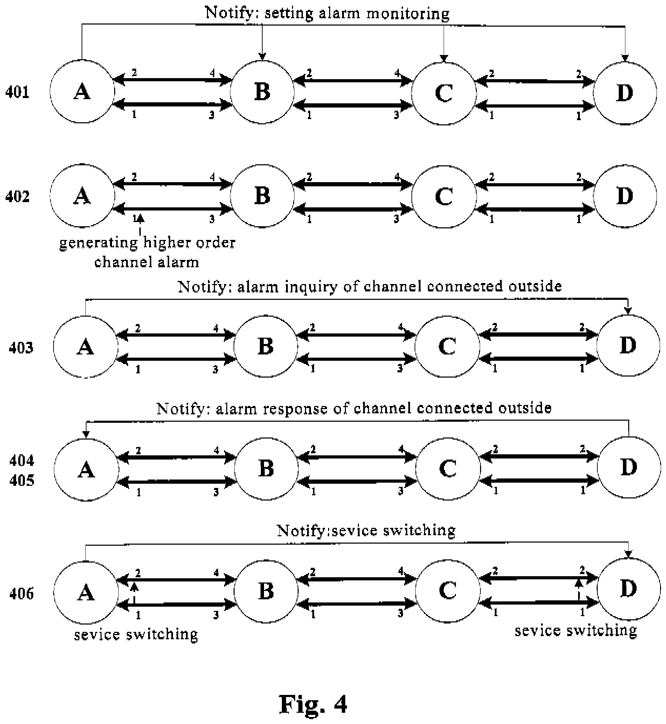

As shown in Fig.4 which is a flowchart of the second embodiment of the method of the present invention, and the procedure specifically comprises the following steps:
Step 401: after a service is successfully established, node A sets a local alarm monitoring and respectively informs nodes B, C and D to set their own local alarm monitoring; nodes B, C and D respectively set their own local alarm monitoring according to the request of node A;
Step 402: No.1 VC4 of No.1 optical port of the working connection of node A generates a channel alarm;
Step 403: the transmission plane of node A reports the channel alarm to the control plane; whether the channel alarm is transmitted from the outside of the connection shall be determined after node A analyzes comprehensively; therefore node A inquires the tail node through the notify message to determine whether the channel alarm exists outside the connection or not;
Step 404: node D receives the alarm inquiry request of node A and requests the local transmission plane to refresh No.1 VC4 of No.1 optical port to determine the existing of the alarm;
Step 405: after node D receives an alarm information outside of the connection section reported by the transmission plane (namely the alarm information is caused by the malfunction outside the connection), node D sends the alarm information outside the connection section to node A through notify message;
Step 406: node A receives the alarm information outside the connection section reported by node D; now two conditions exist: if the outside channel alarm does not exist, which means the malfunction occurred in the inside of the connection, and then node A shall start the service protection restoration process with the procedure same as step 304 to 305; if the outside channel alarm exists, which means the malfunction occurred in the outside of the connection, and the service protection restoration action has no need to start.

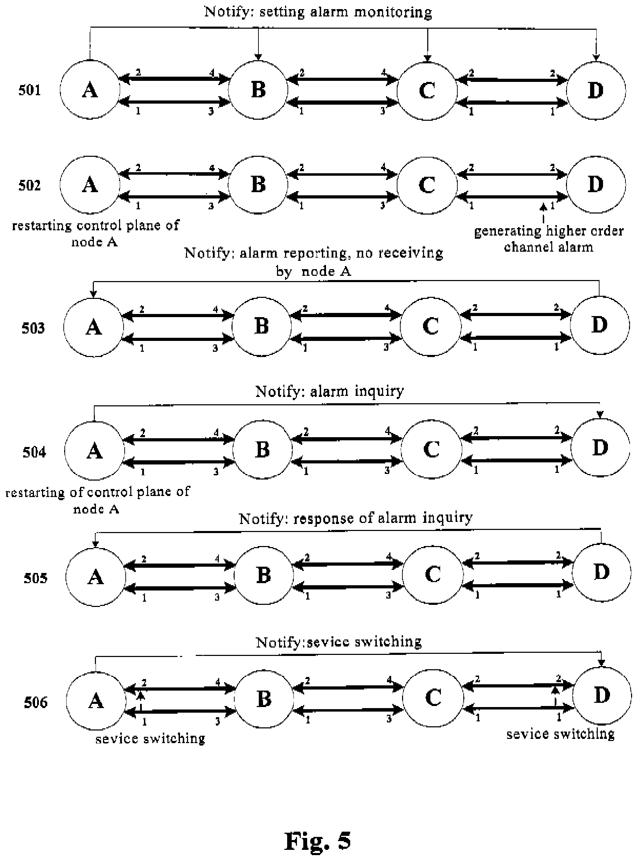

As shown in Fig.5 which is a flowchart of the third embodiment of the method of the present invention, and the procedure specifically comprises the following steps:
Step 501: after a service is successfully established, node A sets a local alarm monitoring and respectively informs nodes B, C and D to set their own local alarm monitoring; nodes B, C and D respectively set their own local alarm monitoring according to the request of node A;
Step 502: the control plane of node A restarts, and at the same time, No.1 VC4 of No.1 optical port of node D generates a channel alarm;
Step 503: node A is not able to receive the alarm information reported by node D because of node A does not start;
Step 504: node A initiatively inquires the alarm information from node D through notify message after node A restarts;
Step 505: node D requests the local transmission plane of the node D to refresh the current alarm information of the node D after received the inquiry request of node A, and sends the alarm information reported by the transmission plane to node A through notify message;
Step 506: node A receives the alarm information reported by node D and judges the working connection as malfunction from analysis, and then node A shall start the service protection restoration process with the procedure same as step 304 to 305.

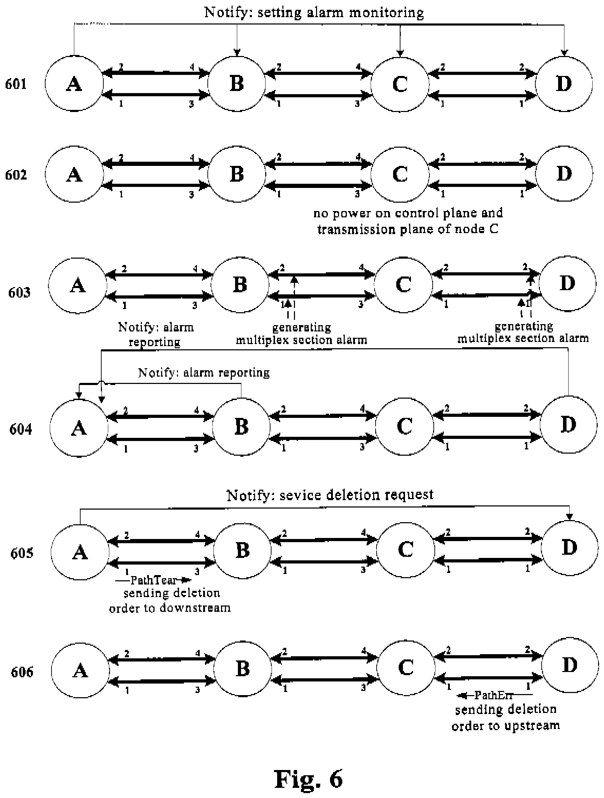

As shown in Fig.6 which is a flowchart of the fourth embodiment of the method of the present invention, and the procedure specifically comprises the following steps:
Step 601: after a service is successfully established, node A sets a local alarm monitoring and respectively informs nodes B, C and D to set their own local alarm monitoring; nodes B, C and D respectively set their own local alarm monitoring according to the request of node A;
Step 602: the transmission plane and the control plane of node C both has no power and can not carry out normal operation;
Step 603: the multiplex section alarm information can be detected on No. 1 and No.2 optical ports of node B on the receiving direction and No.1 and No.2 optical ports of node D;
Step 604: the transmission planes of nodes B and D respectively reported the multiplex section alarm information to their own local control plane, and nodes B and D send the multiplex section alarm information to node A through the notify message after being matched by the control planes of nodes B and D.
Step 605: the working connection and the protection connection both are determined as malfunction after node A received the multiplex section alarm information of nodes B and D; if the management plane sends the order to delete the whole service, node A shall send RSVP PathTear (one deletion message of RSVP protocol) message to downstream to carry out deletion service, and at the same time, sends notify message to inform node D to carry out the service deletion action;
Step 606: node D sends RSVP PathErr (one delete message of RSVP protocol) message to node C to carry out service deletion after node D receives the service deletion request message sent by node A;
   So far, the transmission resources at nodes A, B and D are effectively released, thereby reducing the formation of the residual connection.

Here, the ASON network structure shown in Fig.2 is taken only as an example to describe the method of the present invention, but the person skilled in the art should know that the method of the present invention is not just limited to the structure shown in Fig.2.

To sum up, the technical scheme of the present invention has the following three characteristics during service maintenance process when the ASON network generates an alarm:
Timeliness: the notify message is directly sent from the source to the destination, and no intervention or parsing is needed at the intermediate node, therefore the transmission of maintenance information through node-to-node manner among nodes are very rapid.
Rationality: protection switching action needs to be carried out at the head node and the tail node simultaneously when the service has a malfunction; due to the timeliness character of the transmission of the notify message, the head node and the tail node can carry out the corresponding maintenance operation almost at the same time, thereby greatly reducing the discontinuity or instantaneous interruption of the service;
Effectiveness: the head node and the tail node initiate the service deletion at the same time due to the notify message, which effectively solves the problems that some nodes on the service path can not receive the deletion request sent by the head node when a node on the service path goes wrong, thereby greatly reducing the formation of the residual connection of the transmission resources.

## Claims

1. A maintenance method for the Automatic Switched Optical Network, ASON, system when a service generates an alarm, the method **characterized by** comprising:
Step A: after a service is successfully established, a head node setting a local alarm monitoring and respectively requesting an intermediate node and a tail node to set an alarm monitoring; and the intermediate node and the tail node setting their own local alarm monitoring according to the requests of the head node;
Step B: when the intermediate node and/or the tail node generates an alarm, notifying the head node of alarm information which affects the service;
Step C: according to the received alarm information, local alarm information of the head node and a protection and restoration strategy pre-configured by the head node, the head node setting a service maintenance strategy and a service maintenance operation, and notifying the service maintenance strategy to the tail node;
Step D: the head node and the tail node carrying out corresponding maintenance operation according to the service maintenance strategy;
wherein step C comprises:
Step C1: the head node judging whether the service has a malfunction according to the received alarm information of a matching of the alarm monitoring nodes and the local alarm information of the head node;
Step C2: when it is judged that the service has a malfunction, the head node setting the service maintenance strategy for the head node and the tail node according to the protection and restoration strategy pre-configured by the head node;
Step C3: the head node sending the service maintenance strategy to the transmission plane of the head node, and transmitting the notify message with the service maintenance strategy to the tail node;
wherein step B comprises:
when the intermediate node or the tail node generates an alarm, their control planes sending the alarm information which affects the service to the head nodethrough the notify message according to the matching of the alarm monitoring nodes wherein a transmission plane alarm report is carried in the notify message, wherein the matching operation refers to determine the alarm generated by the time slot which bears service.

2. The maintenance method according to Claim 1, **characterized in that** step A comprises:
Step A1: the control plane of the head node storing the route information of the whole service path during the service establishing process; and the intermediate node and the tail node storing their local inputting port identifier, local outputting port identifier and local time slot information of the service passing through the intermediate node and the tail node;
Step A2: after establishing the service successfully, the head node setting an alarm monitoring to a corresponding time slot of a transmission plane of the head node according to the inputting port identifier, the outputting port identifier and the time slot information of the head node through which the service passes; and at the same time, the head node requesting the intermediate node and the tail node to set an alarm monitoring using a notify message with an alarm monitoring setting request;
Step A3: the intermediate node and the tail node setting an alarm monitoring to corresponding time slots of their transmission planes according to the inputting port identifier, the outputting port identifier and the time slot information of the service passing through the intermediate node and the tail node

3. The maintenance method according to Claim 1, **characterized in that** the service maintenance strategy set by the head node at least comprises one of the following strategies: service prohibition, service permission, service deletion, service bridging, service switching, service bridging cancellation, and service switching cancellation.

4. The maintenance method according to Claim 3, **characterized in that** when the service maintenance strategy is the service deletion, step D comprises:
Step D1: when a management plane sends a service deletion request, the head node finding that the service still has an alarm according to the stored alarm information, initiating the deletion to the downstream, and at the same time, requesting the tail node, using the notify message with an service deletion request, to initiate the service deletion together with the head node;
Step D2: the tail node initiating the service deletion to the upstream after receiving the deletion request from the head node.

5. The maintenance method according to any of Claims 1 to 4, **characterized by**, further comprising:
Step E: after a reboot of the head node, the head node actively inquiring the alarm information of the intermediate node and/or the tail node; the intermediate node and/or the tail node sending their current alarm information to the head node according to the alarm inquiring request of the head node.

6. The maintenance method according to Claim 5, **characterized in that** step E comprises:
Step E1: when the head node reboots itself, the head node inquiring the reported alarm information of the intermediate node and/or the tail node lost during reboot process using the notify message with an alarm inquiry;
Step E2: when receiving the alarm inquiry request from the head node, the intermediate node and/or the tail node of the service refreshing the current alarm information with their transmission planes, and sending the newest alarm information to the head node using the notify message with an alarm inquiry response.

## Patentansprüche

1. Wartungsverfahren für das automatisch umgeschaltete optische Netzwerk-, ASON, -System, wenn ein Dienst einen Alarm generiert, wobei das Verfahren **dadurch gekennzeichnet ist, dass** es Folgendes umfasst:
Schritt A: nachdem ein Dienst erfolgreich aufgebaut wurde, stellt ein oberster Knoten eine lokale Alarmüberwachung ein und fordert entsprechend einen Zwischenknoten und einen untersten Knoten auf, eine Alarmüberwachung einzustellen; und der Zwischenknoten und der unterste Knoten stellen ihre eigene lokale Alarmüberwachung gemäß den Anforderungen des obersten Knotens ein;
Schritt B: wenn der Zwischenknoten und/oder der unterste Knoten einen Alarm generiert, wird der oberste Knoten bezüglich Alarminformationen benachrichtigt, die den Dienst beeinflussen;
Schritt C: gemäß den empfangenen Alarminformationen, wobei die lokalen Alarminformationen des obersten Knotens und eine Schutz- und Wiederherstellungsstrategie von dem obersten Knoten vorkonfiguriert werden, stellt der oberste Knoten eine Dienstwartungsstrategie und einen Dienstwartungsvorgang ein und benachrichtigt den untersten Knoten bezüglich der Dienstwartungsstrategie;
Schritt D: der oberste Knoten und der unterste Knoten führen den entsprechenden Wartungsvorgang gemäß der Dienstwartungsstrategie durch;
wobei Schritt C Folgendes umfasst:
Schritt C1: der oberste Knoten beurteilt, ob der Dienst eine Fehlfunktion aufweist, gemäß den empfangenen Alarminformationen bezüglich einer Übereinstimmung der den Alarm überwachenden Knoten und der lokalen Alarminformationen des obersten Knotens;
Schritt C2: wenn beurteilt wird, dass der Dienst eine Fehlfunktion aufweist, stellt der oberste Knoten die Dienstwartungsstrategie für den obersten Knoten und den untersten Knoten gemäß der Schutz- und Wiederherstellungsstrategie, die von dem obersten Knoten vorkonfiguriert wurde, ein;
Schritt C3: der oberste Knoten sendet die Dienstwartungsstrategie zur Übertragungsebene des obersten Knotens und überträgt die Benachrichtigungsmeldung mit der Dienstwartungsstrategie zum untersten Knoten;
wobei Schritt B Folgendes umfasst:
wenn der Zwischenknoten oder der unterste Knoten einen Alarm generiert, senden ihre Kontrollebenen die Alarminformationen, die den Dienst beeinflussen, zum obersten Knoten durch die Benachrichtigungsmeldung gemäß der Übereinstimmung der den Alarm überwachenden Knoten, wobei ein Übertragungsebenenalarmbericht in der Benachrichtigungsmeldung getragen wird, wobei der Übereinstimmungsvorgang dazu dient, den generierten Alarm durch das Zeitfenster zu bestimmen, der den Dienst trägt.

2. Wartungsverfahren nach Anspruch 1, **dadurch gekennzeichnet, dass** Schritt A Folgendes umfasst:
Schritt A1: die Kontrollebene des obersten Knotens speichert die Routeninformationen des gesamten Dienstpfads während des Dienstaufbauprozesses; und der Zwischenknoten und der unterste Knoten speichern ihre lokale einzugebende Anschlusskennung, lokale auszugebende Anschlusskennung und die Informationen zum lokalen Zeitfenster des Dienstes, die durch den Zwischenknoten und den untersten Knoten gelangen;
Schritt A2: nach dem erfolgreichen Aufbau des Dienstes stellt der oberste Knoten eine Alarmüberwachung für ein entsprechendes Zeitfenster einer Übertragungsebene des obersten Knotens gemäß der einzugebenden Anschlusskennung, der auszugebenden Anschlusskennung und den Informationen zum Zeitfenster des obersten Knotens, durch den der Dienst gelangt, ein; und gleichzeitig fordert der oberste Knoten den Zwischenknoten und den untersten Knoten dazu auf, eine Alarmüberwachung unter Verwendung einer Benachrichtigungsmeldung mit einer Alarmüberwachungseinstellungsanforderung einzustellen;
Schritt A3: der Zwischenknoten und der unterste Knoten stellen eine Alarmüberwachung für entsprechende Zeitfenster ihrer Übertragungsebenen gemäß der einzugebenden Anschlusskennung, der auszugebenden Anschlusskennung und den Informationen zum Zeitfenster des Dienstes, der durch den Zwischenknoten und den untersten Knoten gelangt, ein.

3. Wartungsverfahren nach Anspruch 1, **dadurch gekennzeichnet, dass** die Dienstwartungsstrategie, die durch den obersten Knoten eingestellt wurde, mindestens eine der folgenden Strategien umfasst: Dienstverbot, Diensterlaubnis, Dienstlöschung, Dienstüberbrückung, Dienstumschaltung, Abbruch der Dienstüberbrückung und Abbruch der Dienstumschaltung.

4. Wartungsverfahren nach Anspruch 3, **dadurch gekennzeichnet, dass**, wenn die Dienstwartungsstrategie die Dienstlöschung ist, Schritt D Folgendes umfasst:
Schritt D1: wenn eine Verwaltungsebene eine Anforderung zur Dienstlöschung sendet, stellt der oberste Knoten fest, dass der Dienst noch immer einen Alarm gemäß den gespeicherten Alarminformationen aufweist, leitet die Löschung nach stromabwärts ein und fordert gleichzeitig den untersten Knoten unter Verwendung der Benachrichtigungsmeldung mit einer Anforderung zur Dienstlöschung auf, die Dienstlöschung zusammen mit dem obersten Knoten einzuleiten;
Schritt D2: der unterste Knoten leitet die Dienstlöschung nach stromaufwärts ein, nachdem die Anforderung zur Löschung vom obersten Knoten empfangen wurde.

5. Wartungsverfahren nach einem der Ansprüche 1 bis 4, **dadurch gekennzeichnet, dass** es ferner Folgendes umfasst:
Schritt E: nach einem Neustart des obersten Knotens fragt der oberste Knoten aktiv die Alarminformationen des Zwischenknotens und/oder des untersten Knotens ab; der Zwischenknoten und/oder der unterste Knoten sendet seine aktuellen Alarminformationen zum obersten Knoten gemäß der Anforderung zur Alarmabfrage des obersten Knotens.

6. Wartungsverfahren nach Anspruch 5, **dadurch gekennzeichnet, dass** Schritt E Folgendes umfasst:
Schritt E1: wenn der oberste Knoten selbst neustartet, fragt der oberste Knoten die gemeldeten Alarminformationen des Zwischenknotens und/oder des untersten Knotens, die während des Neustartprozesses verlorengegangen sind, unter Verwendung der Benachrichtigungsmeldung mit einer Alarmabfrage ab;
Schritt E2: wenn die Anforderung zur Alarmabfrage vom obersten Knoten empfangen wurde, aktualisiert der Zwischenknoten und/oder der unterste Knoten des Dienstes die aktuellen Alarminformationen mit ihren Übertragungsebenen und sendet die neuesten Alarminformationen unter Verwendung der Benachrichtigungsmeldung mit einer Reaktion auf die Alarmabfrage zum obersten Knoten.

## Revendications

1. Procédé de maintenance du système de réseau optique à commutation automatique, ASON, lorsqu'un service génère une alarme, le procédé étant **caractérisé en ce qu'**il comprend :
étape A : après établissement d'un service avec succès, le réglage par un noeud de tête d'une surveillance d'alarme locale et la demande respective à un noeud intermédiaire et à un noeud de queue de régler une surveillance d'alarme ; et le réglage par le noeud intermédiaire et le noeud de queue de leur propre surveillance d'alarme selon les demandes du noeud de tête ;
étape B : lorsque le noeud intermédiaire et/ou le noeud de queue génèrent une alarme, la notification au noeud de tête d'informations d'alarme qui affectent le service ;
étape C : selon les informations d'alarme reçues, les informations d'alarme locales du noeud de tête et une stratégie de protection et de restauration préconfigurée par le noeud de tête, le réglage par le noeud de tête d'une stratégie de maintenance de service et d'une opération de maintenance de service, et la notification de la stratégie de maintenance de service au noeud de queue ;
étape D : la réalisation par le noeud de tête et le noeud de queue d'une opération de maintenance correspondante selon la stratégie de maintenance de service ;
dans lequel l'étape C comprend :
étape C1 : le fait d'estimer par le noeud de tête si le service présente un dysfonctionnement selon les informations d'alarme reçues d'une concordance des noeuds de surveillance d'alarme et des informations d'alarme locales du noeud de tête ;
étape C2 : lorsqu'on estime que le service présente un dysfonctionnement, le réglage par le noeud de tête de la stratégie de maintenance de service pour le noeud de tête et le noeud de queue selon la stratégie de protection et de restauration préconfigurée par le noeud de tête ;
étape C3 : l'envoi par le noeud de tête de la stratégie de maintenance de service au plan de transmission du noeud de tête, et la transmission du message de notification avec la stratégie de maintenance de service au noeud de queue ;
dans lequel l'étape B comprend :
lorsque le noeud intermédiaire ou le noeud de queue génère une alarme, l'envoi par leurs plans de commande des informations d'alarme qui affectent le service au noeud de queue par le biais du message de notification selon la concordance des noeuds de surveillance d'alarme, dans lequel un rapport d'alarme de plan de transmission est acheminé dans le message de notification, dans lequel l'opération de concordance fait référence à la détermination de l'alarme générée par la tranche de temps qui supporte un service.

2. Procédé de maintenance selon la revendication 1, **caractérisé en ce que** l'étape A comprend :
étape A1 : le stockage par le plan de commande du noeud de tête des informations de route du chemin de service entier pendant le processus d'établissement de service ; et le stockage par le noeud intermédiaire et le noeud de queue de leur identifiant de point d'accès d'entrée local, leur identifiant de point d'accès de sortie local et d'informations de tranche de temps locales du service passant par le noeud intermédiaire et le noeud de queue ;
étape A2 : après établissement du service avec succès, le réglage par le noeud de tête d'une surveillance d'alarme à une tranche de temps correspondante d'un plan de transmission du noeud de tête selon l'identifiant de point d'accès d'entrée, l'identifiant de point d'accès de sortie et les informations de tranche de temps du noeud de tête par lequel passe le service ; et en même temps, la demande par le noeud de tête au noeud intermédiaire au noeud de queue de régler une surveillance d'alarme à l'aide d'un message de notification avec une demande de réglage de surveillance d'alarme ;
étape A3 : le réglage par le noeud intermédiaire et le noeud de queue d'une surveillance d'alarme à des tranches de temps correspondantes de leurs plans de transmission selon l'identifiant de point d'accès d'entrée, l'identifiant de point d'accès de sortie et les informations de tranche de temps du service passant par le noeud intermédiaire et le noeud de queue.

3. Procédé de maintenance selon la revendication 1, **caractérisé en ce que** la stratégie de maintenance de service réglée par le noeud de tête comprend au moins l'une des stratégies suivantes : une interdiction de service, une autorisation de service, une suppression de service, une mise en parallèle de service, une commutation de service, une annulation de mise en parallèle de service et une annulation de commutation de service

4. Procédé de maintenance selon la revendication 3, **caractérisé en ce que**, lorsque la stratégie de maintenance de service est la suppression de service, l'étape D comprend :
étape D1 : lorsqu'un plan de gestion envoie une demande de suppression de service, le fait que le noeud de tête trouve que le service a toujours une alarme selon les informations d'alarme stockées, le lancement de la suppression vers l'aval, et en même temps, la demande au noeud de queue, à l'aide du message de notification avec une demande de suppression de service, de lancer la suppression de service conjointement au noeud de tête ;
étape D2 : le lancement par le noeud de queue de la suppression de service vers l'amont après réception de la demande de suppression en provenance du noeud de tête.

5. Procédé de maintenance selon l'une quelconque des revendications 1 à 4, **caractérisé en ce qu'**il comprend en outre :
étape E : après un redémarrage du noeud de tête, l'examen actif par le noeud de tête des informations d'alarme du noeud intermédiaire et/ou du noeud de queue ; l'envoi par le noeud intermédiaire et/ou le noeud de queue de leurs informations d'alarme actuelles au noeud de tête selon la demande d'examen d'alarme du noeud de tête.

6. Procédé de maintenance selon la revendication 5, **caractérisé en ce que** l'étape E comprend :
étape E1 : lorsque le noeud de tête redémarre lui-même, l'examen par le noeud de tête des informations d'alarme rapportées du noeud intermédiaire et/ou du noeud de queue perdues pendant un processus de redémarrage à l'aide du message de notification avec un examen d'alarme ;
étape E2 : lors de la réception de la demande d'examen d'alarme en provenance du noeud de tête, le rafraîchissement par le noeud intermédiaire et/ou le noeud de queue du service des informations d'alarme actuelles avec leurs plans de transmission, et l'envoi des informations d'alarme les plus récentes au noeud de tête à l'aide du message de notification avec une réponse d'examen d'alarme.
